(19) Europäisches Patentamt

European Patent Office

Office européen des brevets

(11) Veröffentlichungsnummer: **0 110 195**
**B1**

(12) **EUROPÄISCHE PATENTSCHRIFT**

(45) Veröffentlichungstag der Patentschrift:
20.07.88

(21) Anmeldenummer: 83111046.5

(22) Anmeldetag: 05.11.83

(51) Int. Cl.⁴: **B 60 K 5/12**

(54) Zweikammer-Motorlager mit hydraulischer Dämpfung.

(30) Priorität: 30.11.82 DE 3244296

(43) Veröffentlichungstag der Anmeldung:
13.06.84 Patentblatt 84/24

(45) Bekanntmachung des Hinweises auf die Patenterteilung:
20.07.88 Patentblatt 88/29

(84) Benannte Vertragsstaaten:
DE FR GB IT SE

(56) Entgegenhaltungen:
EP-A-0 042 909
EP-A-0 053 401
DE-A-2 618 333
DE-A-3 027 742

(73) Patentinhaber: METZELER Gesellschaft mit
beschränkter Haftung, Gneisenaustrasse 15,
D-8000 München 50 (DE)

(72) Erfinder: Hofmann, Walter, Gerhard von Dietz-
Strasse 15, D-6257 Hünfelden 1 (DE)

(74) Vertreter: Michelis, Theodor, Dipl.- Ing.,
Gneisenaustrasse 15, D-8000 München 50 (DE)

## Beschreibung

Die Erfindung betrifft ein Zweikammer-Motorlager mit hydraulischer Dämpfung, insbesondere für Kraftfahrzeuge, desse flüssigkeitsgefüllte und mit gummielastischen Umfangswänden versehene Kammern über eine, mit einer Drosselöffnung versehene Zwischenplatte miteinander verbunden sind und in dessen motorseitiger Kammer durch einen Membran eine weitere luftgefüllte Kammer abgetrennt ist.

Ein derartiges Motorlager ist aus der EP-A-0 042 909 bekannt. Bei diesem Motorlager liegt jedoch die Membran der als eigentliche Tragfeder des Lagers wirkenden Gummiwandung gegenüber, d.h. sie ist zu dieser in Reihe geschaltet und weist darüber hinaus einen Querschnitt auf, der größer ist, als der hydraulisch wirksame Kammerquerschnitt. Da derartige Membranen aber im wesentlichen zur Entkopplung hochfrequenter Schwingungen mit einer geringen Schwingungsamplitude von etwa 0,1 mm dienen und durch entsprechende Gestaltung oder Materialwahl einen größeren Ausschlag nicht zulassen sollen, kann eine derartige Membran eine solche Aufgabe nicht erfüllen, da maximale Auslenkungen von weniger als 0,1 mm weder fertigungstechnisch noch funktionsmäßig beherrschbar sind.

Demgegenüber liegt der Erfindung die Aufgabe zugrunde, ein Zweikammer-Motorlager mit hydraulischer Dämpfung zu schaffen, bei denen insbesondere bei kleinen Amplituden hoher Frequenz eine optimale Isolierung sowohl des akustischen Verhaltens als auch der eingeleiteten Schwingungen gewährleistet ist.

Zur Lösung dieser Aufgabe ist erfindungsgemäß vorgesehen, daß die Membrankammer zentral in die obere, von der als eigentliche Tragfeder ausgebildeten Umfangswand (5) umschlossenen Motorlagerplatte eingelassen und gegen die motorseitige Flüssigkeitskammer durch eine elastische Gummimembran abgeschlossen ist, deren Durchmessr etwa 1/4 bis 1/3 des größten hydraulischen Durchmessers der oberen Flüssigkeitskammer beträgt und die eine größere Shore-A-Härte als die tassenförmig ausgebildete Kammerwandung der unteren Flüssigkeitskammer aufweist.

Durch die entsprechende Durchmesserwahl der Membran im Verhältnis zum hydraulischen Querschnitt der Kammer ergibt sich damit ein relativ großes Übersetzungsverhältnis, so daß die Membran beispielsweise bei einer Amplitude von 0,1 mm eine Auslenkung von 0,3 bis 0,4 mm erfährt, die durch eine entsprechende Materialwahl und Formgebung der Membran sicher begrenzt werden kann, ohne daß ein mechanischer Anschlag vorzusehen ist. Da darüber hinaus der Gummi der Membran eine größere Shore-A-Härte als die untere Kammerwandung aufweist, wird bei Aufbringung der statischen Last des Motors erreicht, daß durch den ansteigenden Flüssigkeitsdruck in der oberen Kammer nicht die Membran ausgelenkt wird, sondern die Flüssigkeit in die untere Kammer gedrückt wird und dabei die weichere, untere Kammerwandung ausbeult, ohne daß die Membran in ihrer Lage verschoben wird. Bei hochfrequenten Schwingungen geringer Amplitude wird dann jedoch die Membran in Schwingungen versetzt - ohne daß ein Flüssigkeitsübertritt durch die Drosselöffnung von der oberen in die untere Kammer erfolgt - und je nach Phasenlage der zu schwingenden Flüssigkeit eine Absenkung der dynamischen Steifigkeit des Lagers und damit eine erhebliche Verminderung der Schallübertragung bewirkt.

In Weiterbildung der Erfindung kann die Membrankammer über eine Entlüftungsbohrung mit der Außenatmosphäre in Verbindung stehen. Es ist aber auch möglich, daß die Membrankammer nach außen abgeschlossen ist und daß dann der Druck in der Membrankammer einstellbar ist.

Für eine optimale Abstimmung soll dabei die Wandung der unteren Flüssigkeitskammer eine Shore-A-Härte von 10 bis 50, insbesondere 30 bis 40 aufweisen.

Anhand einer schematischen Zeichnung sind Aufbau und Wirkungsweise eines Ausführungsbeispiels nach der Erfindung näher erläutert. Dabei zeigen:

Fig. 1 einen Längsschnitt durch ein Zweikammer-Motorlager,

Fig. 2 u. 3 Diagramme für die Dämpfung und die dynamische Steifigkeit herkömmlicher, nicht entkoppelter Hydrolager und

Fig. 4 u. 5 entsprechende Diagramme für die Dämpfung und die dynamische Steifigkeit der erfindungsgemäßen entkoppelten Hydrolager.

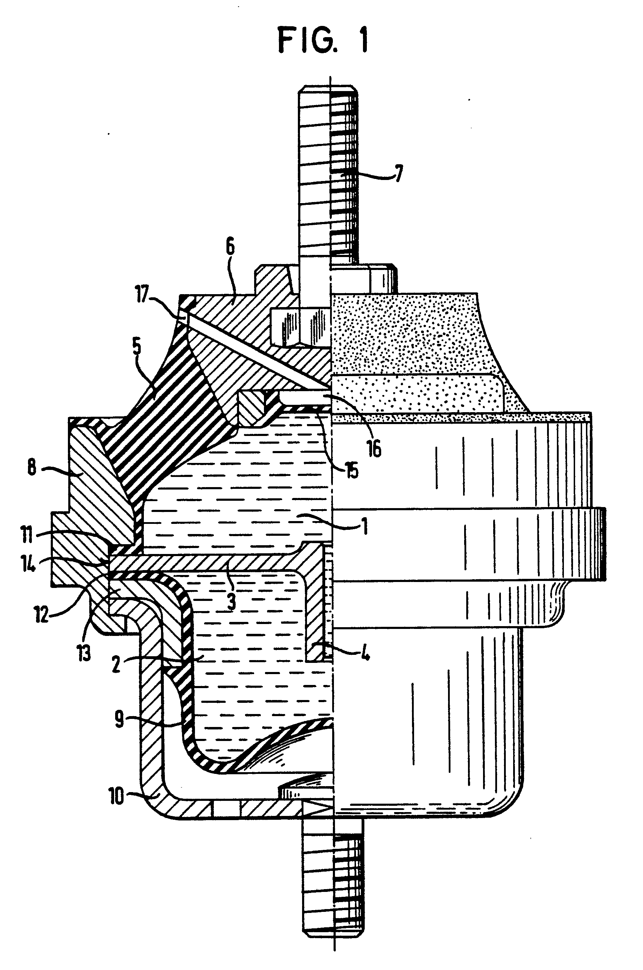

Wie aus Fig. 1 zu ersehen ist, besteht das Motorlager im wesentlichen aus einer oberen Flüssigkeitskammer 1 und einer unteren Flüssigkeitskammer 2, die durch eine starre Zwischenplatte 3 mit einer düsenförmigen Drossel 4 voneinander getrennt sind. Die obere Kammer 1 wird dabei von einer starkwandigen, hohlkegelförmigen Kammerwandung 5 aus gummielastischem Material gebildet, die an der oberen Stirnseite von der Motorlagerplatte 6 mit einem Haltebolzen 7 abgeschlossen und am unteren Ende mit dem Widerlager 8 des Lagers haftend verbunden ist. Die untere Kammer 2 ist von einer angenähert tassenförmigen Kammerwandung 9 aus gummielastischem Material relativ geringer Härte gebildet, die noch von einer massiven Schutzkappe 10 umschlossen ist. Die Zwischenplatte 3 ist dabei zwischen dem nach außen umgestülpten unteren Rand 11 der oberen Kammerwandung 5 und dem Rand 12 der unteren Kammerwandung 9 sowie einen zusätzlichen Spannring 13 in einer umlaufenden Innennut 14 des Widerlagers 8 eingespannt und damit starr gehalten.

Auf der Unterseite der Motorlagerplatte 6 ist nunmehr erfindungsgemäß eine von einer tellerförmigen Membran 15 aus Gummi gegen die Kammer 1 abgeschlossene Membrankammer 16 eingelassen, die nach dem dargestellten Ausführungsbeispiel über einen Kanal 17 mit der Außenatmosphäre in Verbindung steht.

Bei großen Schwingungsamplituden, die im allgemeinen bei niedriger Frequenz auftreten, tritt nun ein Flüssigkeitsaustausch zwischen der oberen Kammer 1 und der unteren Kammer 2 auf, wobei die untere Kammer wegen der geringen Härte der Kammerwandung 9, die im allgemeinen aus einem Gummi mit einer Shore-A-Härte von 10 bis 50, insbesondere 30 bis 40, hergestellt ist, nur einen sehr geringen Strömungswiderstand gegen das Einströmen der Flüssigkeit aus der oberen Kammer 1 aufweist. Damit werden also große Amplituden des Motors sehr stark gedämpft. Wesentlich für diese Dämpfungseigenschaften sind dabei das Verhältnis der Volumensteifigkeit der oberen Kammerwandung 5 zur Volumensteifigkeit der unteren Kammerwandung 9 sowie Länge und Durchmesser der düsenartigen Drossel 4.

Bei Schwingungen mit kleiner Amplitude, die im allgemeinen bei höheren Frequenzen auftreten, wird demgegenüber die gummielastische Membran 15 ausgebeult, so daß keine Flüssigkeit über die Drossel 4 in die untere Kammer 2 fließt. Dadurch ist bei kleinen Amplituden die hydraulische Dämpfung entkoppelt, so daß das akustische Verhalten des Lagers durch Wegschalten der Hydraulik optimal ist.

Dies hat besondere Bedeutung dadurch, da in Kraftfahrzeugkarosserien im allgemeinen bei höheren Frequenzen Eigenresonanzen auftreten, die erhebliche Geräuschprobleme verursachen. Ein erfindungsgemäß entkoppeltes Lager bietet dabei die Möglichkeit, ein bestimmtes Geräuschproblem durch Abstimmung der Minimalresonanz zu eliminieren. Diese Abstimmung ist dabei im wesentlichen beeinflußbar durch die Parameter Steifigkeit, Durchmesser und Volumensteifigkeit der Membran 15, sowie der Gegendruck in der hinter der Membran liegenden Luftkammer 16. Dabei kann dieser Gegendruck in weiten Grenzen dadurch variiert werden, daß die Luftkammer 16 entweder über einen Kanal 17 mit der Außenatmosphäre in Verbindung steht oder aber indem die Luftkammer 16 selbst gegen die Außenatmosphäre voll abgeschlossen ist und ggf. mit einem erhöhten Druck beaufschlagt wird. Dabei können die vorgenannten Parameter so gewählt werden, daß die Flüssigkeitsmasse, die durch Ausbeulung der Entkopplungsmembran schwingt, eine Resonanzfrequenz erzeugt, die auf eine spezielle, vorgegebene Resonanz abgestimmt ist. Diese Resonanzfrequenz fo entspricht dabei folgender Bedingung:

$$fo \doteq \sqrt{\tfrac{c}{m}}$$

Dabei bedeuten:
c $\doteq$ Steifigkeit der Entkopplungsmembran,
m $\doteq$ schwingende Flüssigkeit

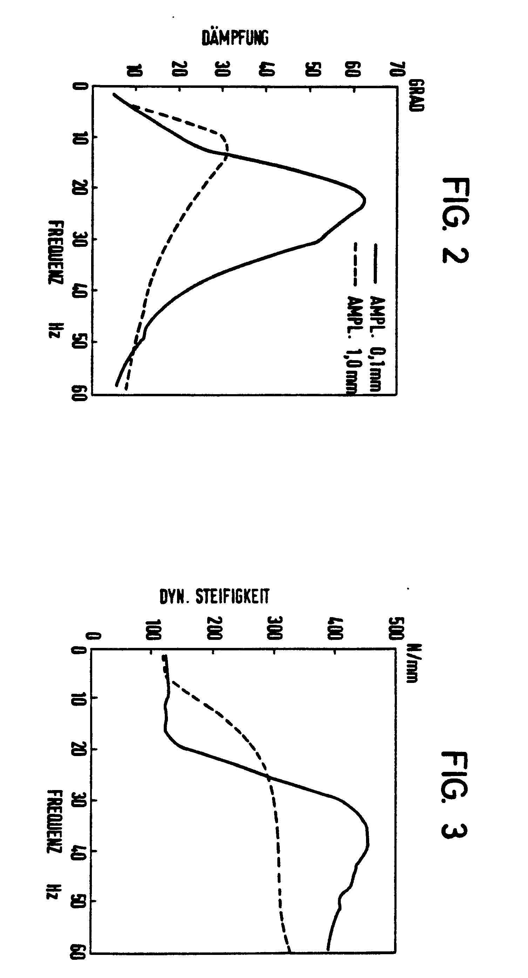

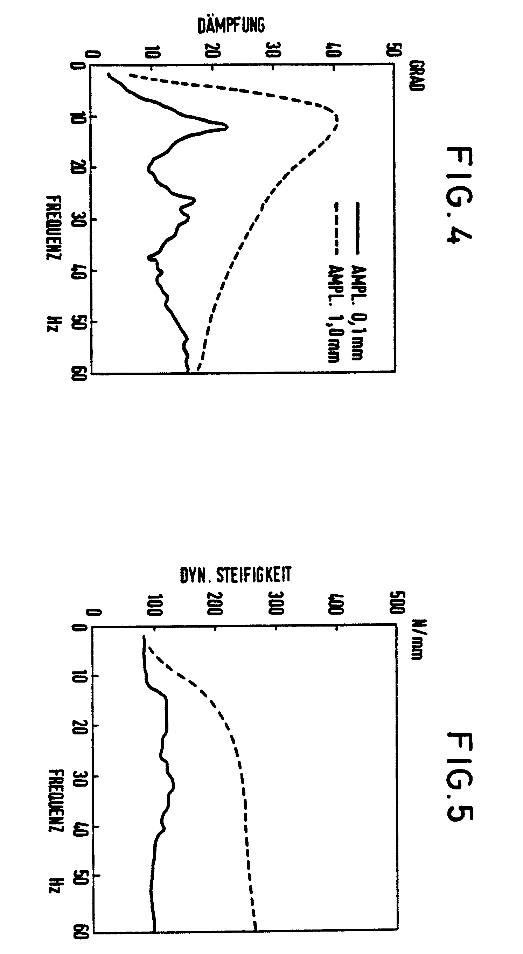

In den Diagrammen nach den Fig. 2 bis 5 sind Dämpfungsverhalten und die dynamische Steifigkeit über der Frequenz aufgetragen und für ein herkömmliches, nicht entkoppeltes Hydrolager und ein erfindungsgemäß entkoppeltes Hydrolager gegenübergestellt. Wie man dabei aus den Fig. 2 und 3 ersieht, in denen einmal die Dämpfung und einmal die dynamische Steifigkeit über der Frequenz für ein nicht entkoppeltes Hydrolager aufgetragen sind, ergibt sich daraus eine Erhöhung der Dämpfung bei Verringerung der Amplitude sowie ein Anstieg der dynamischen Steifigkeit, obwohl ein entgegengesetzten Verhalten erwünscht wäre. Demgegenüber zeigen die Fig. 4 und 5 den Verlauf der Dämpfung und der dynamischen Steifigkeit für ein entkoppeltes Hydrolager, woraus sich ergibt, daß das Dämpfungsmaximum zwar gleich bleibt, gute Dämpfungen hier jedoch bei hohen Amplituden und niedrigen Frequenzen auftreten und ein gutes akustisches Verhalten bei niedrigen Amplituden und hohen Frequenzen gewährleistet ist. Dabei nimmt die Dämpfung mit kleiner werdender Amplitude ab und auch die Steifigkeit bleibt bei kleinen Amplituden auf dem statischen Ausgangsniveau. Dabei zeigt insbesondere Fig. 5, daß die Steifigkeit in einem weiten Frequenzbereich auf niedrigem Niveau gehalten werden kann.

Insgesamt ergibt sich also ein Lager, bei dem hohe Schwingungsamplituden des Motors stark gedämpft werden, wobei das Dämpfungsmaximum auf die Eigenfrequenz des Motors gelegt werden kann und daß bei kleinen Amplituden die hydraulische Dämpfung entkoppelt ist, so daß sich ein optimales akustisches Verhalten ergibt.

**Patentansprüche**

1. Zweikammer-Motorlager mit hydraulischer Dämpfung, insbesondere für Kraftfahrzeuge, dessen flüssigkeitsgefüllte und mit gummielastischen Umfangswänden (5, 9) versehene Kammern (1, 2) über eine, mit einer Drosselöffnung (4) versehene Zwischenplatte (3) miteinander verbunden sind und in dessen motorseitiger Kammer (1) durch eine Membran (15) eine weitere, luftgefüllte Kammer (16) abgetrennt ist, dadurch gekennzeichnet, daß die weitere luftgefüllte Kammer (16) zentral in die obere, von der als eigentliche Tragfeder ausgebildeten Umfangswand (5) umschlossenen Motorlagerplatte (6) eingelassen und gegen die motorseitige Flüssigkeitskammer (1) durch eine elastische Gummimembran (15) abgeschlossen ist, deren Durchmesser etwa 1/4 - 1/3 des größten hydraulischen Durchmessers der oberen Flüssigkeitskammer (1) beträgt und die eine größere Shore-A-Härte als die tassenförmig ausgebildete Kammerwandung (9) der unteren Flüssigkeitskammer (2) aufweist.

2. Zweikammer-Motorlager nach Anspruch 1, dadurch gekennzeichnet, daß die Membrankammer (16) über eine Entlüftungsbohrung (17) mit der Außenatmosphäre in Verbindung steht.

3. Zweikammer-Motorlager nach Anspruch 1, dadurch gekennzeichnet, daß die Membrankammer (16) nach außen abgeschlossen ist.

4. Zweikammer-Motorlager nach Anspruch 3, dadurch gekennzeichnet, daß der Druck in der Membrankammer (16) einstellbar ist.

5. Zweikammer-Motorlager nach Anspruch 1, dadurch gekennzeichnet, daß die Wandung (9) der unteren Flüssigkeitskammer (2) eine Shore-A-Härte von 10 bis 50, insbesondere 30 bis 40, aufweist.

**Claims**

1. Twin-chamber engine mount with hydraulic damping, in particular for motor vehicles, whose fluid-filled chambers (1, 2) provided with elastomeric peripheral walls (5, 9) are connected to each other by means of an intermediate plate (3) provided with a restrictor opening (4) and in whose chamber (1) on the engine side a further, air-filled, chamber (16) is separated by a diaphragm (15), characterized in that the further, air-filled, chamber (16) is recessed centrally into the upper engine mount plate (6) enclosed by the peripheral wall (5) designed as actual bearing spring and is closed off from the fluid chamber (1) on the engine side by a flexible rubber diaphragm (15), the diameter of which is approximately 1/4 - 1/3 of the greatest hydraulic diameter of the upper fluid chamber (1) and which has a greater Shore A hardness than the cup-shaped chamber wall (9) of the lower fluid chamber (2).

2. Twin-chamber engine mount according to Claim 1, characterized in that the diaphragm chamber (16) is connected to the outside atmosphere via a venting bore (17).

3. Twin-chamber engine mount according to Claim 1, characterized in that the diaphragm chamber (16) is closed off from the outside.

4. Twin-chamber engine mount according to Claim 3, characterized in that the pressure in the diaphragm chamber (16) is adjustable.

5. Twin-chamber engine mount according to Claim 1, characterized in that the wall (9) of the lower fluid chamber (2) has a Shore A hardness of 10 to 50, in particular 30 to 40.

**Revendications**

1. Support de moteur à deux chambres et à amortissement hydraulique, notamment pour véhicules automobiles, dans lequel les chambres (1, 2), qui sont remplies par un liquide et comportent des parois circonférentielles (5, 9) présentant l'élasticité du caoutchouc, sont reliées entre elles par l'intermédiaire d'une plaque intercalaire (3) comportant une ouverture d'étranglement (4), une chambre supplémentaire (16) remplie d'air étant séparée, dans la chambre (1) située du côté du moteur, par une membrane (15), caractérisé par le fait que la chambre supplémentaire (16) remplie d'air est ménagée, dans une position centrée, dans la plaque supérieure (6) du support du moteur, entourée par la paroi circonférentielle (5) réalisée sous la forme d'un ressort de support proprement dit, et est fermée en direction de la chambre (1) remplie de liquide, située du côté du moteur, par une membrane en caoutchouc élastique (15), dont le diamètre est égal à environ 1/4 - 1/3 du diamètre hydraulique maximum de la chambre supérieure (1) remplie de liquide, et qui possède une dureté Shore A plus élevée que la paroi (9) de la chambre, réalisée sous la forme d'une coupelle, de la chambre inférieure (2) remplie de liquide.

2. Support de moteur à deux chambres selon la revendication 1, caractérisé par le fait que la chambre à membrane (16) est reliée à l'atmosphère extérieure par l'intermédiaire d'un perçage de désaération (17).

3. Support de moteur à deux chambres suivant la revendication 1, caractérisé par le fait que la chambre à membrane (16) est fermée en direction de l'extérieur.

4. Support de moteur à deux chambres suivant la revendication 3, caractérisé par le fait que la pression dans la chambre à membrane (16) est réglable.

5. Support de moteur à deux chambres suivant la revendication 1, caractérisé par le fait que la paroi (9) de la chambre inférieure (2) remplie de liquide possède une dureté Shore A comprise entre 10 et 50 et notamment entre 30 et 40.

# FIG. 1

FIG. 2

FIG. 3

DÄMPFUNG

GRAD

50 — 40 — 30 — 20 — 10 — 0

FREQUENZ

0   10   20   30   40   50   60   Hz

—— AMPL. 0,1mm
‑‑‑‑‑ AMPL. 1,0mm

FIG.4

DYN. STEIFIGKEIT

N/mm

500 — 400 — 300 — 200 — 100 — 0

FREQUENZ

0   10   20   30   40   50   60   Hz

FIG.5